# FASCICULE DE BREVET EUROPEEN

(11) **EP 1 925 864 B1**
(45) Date de publication et mention de la délivrance du brevet: **22.02.2012**
(21) Numéro de dépôt: 08002094.4
(22) Date de dépôt: 22.04.2005
(51) Int. Cl.: B60K 15/03, B60K 15/035, F17C 13/12, F16K 31/00, F16K 17/38

(54) **Véhicule à carburant gazeux et système de purge automatique**
Fahrzeug mit gasförmigem Treibstoff und automatisches entlüftungssystem
Vehicle with gaseous fuel and automatic purge system

(30) Priorité: 30.04.2004 FR 0404690
(43) Date de publication de la demande: 28.05.2008
(62) Demande divisionnaire de: 05103274.6
(73) Titulaire: Michelin Recherche et Technique S.A., 1763 Granges-Paccot (CH)
(72) Inventeur: Delfino, Antonio, 1772 Grolley (CH); Macherel, Philippe, 1744 Chenance (CH); Laurent, Daniel, 1723 Marly (CH)
(74) Mandataire: Bauvir, Jacques

(56) Documents cités:
- EP-A- 1 070 620
- WO-A-2004/014683
- FR-A- 2 791 758
- FR-A- 2 828 139
- FR-A- 2 829 435
- US-A- 4 554 027
- US-A- 4 774 923
- US-A1- 2001 018 929

## Description

### DOMAINE DE L'INVENTION

La présente invention se rapporte aux réservoirs de stockage de gaz dans un véhicule routier quelle que soit sa motorisation, et notamment mais pas uniquement applicable pour le stockage d'hydrogène gazeux et/ou le stockage d'oxygène gazeux dans un véhicule à pile à combustible.

### ETAT DE LA TECHNIQUE

Un des problèmes que pose le stockage de gaz sur un véhicule est le danger en cas d'incendie survenant dans les environs du réservoir, ainsi qu'en cas d'élévation trop forte de la pression. On a déjà proposé pour les véhicules à gaz de pétrole liquéfié des soupapes de décharge afin de laisser fuir progressivement le gaz en cas de surpression, provoquée par exemple par un échauffement anormal dû à un incendie, car il faut à tout prix éviter le risque d'explosion, quitte à ce que le carburant alimente un incendie sous un débit limité. C'est ainsi que des soupapes de sécurité qui sont ouvertes de façon irréversible sous l'effet d'un échauffement ont déjà été proposées dans l'état de la technique : le lecteur pourra consulter par exemple la demande JP60/073200 qui décrit une telle soupape de sécurité dans laquelle l'élément d'étanchéité est une membrane obturant un orifice et l'élément commandant une ouverture définitive est une pastille réalisée en alliage à mémoire de forme portant une aiguille, de sorte que, en cas d'échauffement, la pastille en alliage à mémoire de forme change de forme et repousse l'aiguille contre la membrane jusqu'à provoquer la rupture de ladite membrane.

Cependant, on ne connaît pas de solution suffisamment robuste pour trouver implantation dans une automobile et jouer un rôle de sécurité seulement en cas d'incendie, et de le jouer à coup sûr en cas d'incendie. Ainsi, par exemple, ne connaît pas de solution satisfaisante permettant d'éviter que le carburant gazeux qui s'échappe du réservoir aggrave un incendie qui aurait pu survenir sans que le système d'alimentation en carburant en soit à l'origine. Ainsi, en cas d'accident impliquant plusieurs véhicules, si l'un de ces véhicules perd son carburant qui se répand alors sur la chaussée, par exemple de l'essence, il existe un risque significatif que l'essence s'enflamme et qu'un autre véhicule se trouve immobilisé par dessus cet incendie. Dans ce cas, si l'incendie a lieu sous le réservoir d'un carburant gazeux de cet autre véhicule, à supposer que celui-ci soit équipé d'une soupape de décharge en cas de surpression, il faut d'abord attendre que la pression dans le réservoir s'élève avant qu'une telle sécurité joue son rôle. De plus, si la pression prévalant dans le réservoir est faible parce que la quantité résiduelle de carburant est faible, il faudra attendre plus longtemps avant qu'une telle sécurité agisse, à tel point que le matériau constitutif du réservoir pourrait avoir perdu ses propriétés mécaniques au point de céder et donc provoquer une explosion avant même que la pression se soit suffisamment élevée pour que la soupape de décharge en cas de surpression agisse.

Si l'on pouvait agir plus tôt pour purger le réservoir, on améliorerait les conditions de sécurité des véhicules stockant un carburant gazeux sous pression, notamment les véhicules à pile à combustible qui fonctionnent à l'hydrogène.

Dans le domaine des véhicules à pile à combustible, la demande de brevet WO03/035419 propose des moyens d'évacuation de l'hydrogène non consommé par la pile, en collectant les fuites autour de la pile, en collectant les fuites autour du réservoir et en installant une soupape de surpression sur ledit réservoir. Là encore, rien n'est prévu pour améliorer la sécurité en cas d'incendie.

WO 2004/014683 divulgue une soupape selon le préambule de la revendication 8, et un véhicule selon le préambule de la revendication 1.

### BREVE DESCRIPTION DE L'INVENTION

Un objectif de l'invention consiste à faire en sorte que, en cas d'incendie, le réservoir de fluide sous pression existant à bord d'un véhicule soit purgé automatiquement dans des délais aussi courts que possible, en emmenant le fluide aussi loin que possible de l'endroit où l'incendie s'est déclaré.

Ce objectif est atteint, selon l'invention grâce à soupape tel que définie dans la revendication 8 et grâce à un véhicule tel que défini dans la revendication 1.

Deux réalisations pratiques d'une application à un réservoir d'hydrogène sont décrites ci-dessous.

La première réalisation utilise une soupape de sécurité comportant un mécanisme d'ouverture commandé par une pastille réalisée en matériau à mémoire de forme. L'autre réalisation propose une soupape de sécurité commandée par un mécanisme comportant une capsule détruite par l'effet de la chaleur. Dans les deux cas, les deux réalisations présentent l'avantage qu'elles fonctionnent même lorsque l'installation électrique pilotant tout le fonctionnement du véhicule est hors service. En effet, les éléments nécessaires à la commande des soupapes de sécurité fonctionnent sur des principes thermomécaniques.

On peut par exemple installer le réservoir proprement dit à l'arrière du véhicule. On peut aussi l'installer notamment dans le plancher, dans la partie centrale de celui-ci car c'est une zone peu susceptible d'être déformée même en cas d'accident particulièrement violent du véhicule. Il est possible de faire cheminer la canalisation assurant l'acheminement du fluide sous pression hors du véhicule en passant dans une zone particulièrement sensible aux risques d'incendie et d'installer à cet endroit la soupape de sécurité.

Par exemple, constatant qu'il existe un risque qu'un incendie existe sous le plancher d'un véhicule, la canalisation de purge peut cheminer sous le plancher de façon à installer à cet endroit une soupape à déclenchement thermique, puis la canalisation de purge se poursuit jusqu'à l'orifice de décharge qui est disposé loin du plancher, par exemple sur le toit du véhicule. C'est cette application qui est illustrée plus en détails ci-dessous.

Mais il existe bien d'autres applications possibles. Si l'on considère qu'il faut se prémunir des conséquences d'un incendie se déclarant dans le compartiment moteur, la canalisation peut aussi être installée de façon à rejoindre l'avant du véhicule, par exemple dans le compartiment où est logée la pile à combustible produisant l'énergie électrique nécessaire au véhicule, de façon à y installer la soupape à déclenchement thermique, puis la canalisation de purge chemine jusqu'à l'orifice de décharge qui est disposé loin de ce compartiment, par exemple à l'arrière du véhicule. On peut traiter de la même façon plusieurs zones où l'on considère qu'il existe un risque significatif de début d'incendie et dont on veut annuler ou au moins réduire les conséquences. On peut par exemple traiter l'habitacle d'un véhicule. On peut traiter le réservoir de n'importe quel gaz présentant un certain danger, notamment tous les gaz cités ci-dessus.

Ajoutons enfin que l'on peut installer en parallèle plusieurs canalisations de purge partant toutes d'un même réservoir, aboutissant toutes au même orifice de décharge, chacune passant par une zone de véhicule où un incendie est susceptible de prendre naissance, pour y installer une soupape à déclenchement thermique.

Un exemple non limitatif d'utilisation de l'invention est illustré ci-dessous dans le cas où le réservoir est d'un type particulier, décrit dans la demande de brevet EP 03/028056.4 déposée le 8 décembre 2003.

### BREVE DESCRIPTION DES FIGURES

Sur les figures suivantes :
- La figure 1 est une vue d'un véhicule de tourisme montrant l'implantation générale des organes de l'invention ;
- La figure 2 montre une soupape de sécurité en configuration normalement fermée, associée à un réservoir à cellules multiples ;
- La figure 3 montre la même soupape de sécurité que celle de la figure 2, cette fois en configuration ouverte ;
- La figure 4 montre une autre soupape de sécurité en configuration normalement fermée, associée au même réservoir à cellules multiples ;
- La figure 5 montre encore une autre soupape de sécurité en configuration normalement fermée, toujours associée au même réservoir.

### DESCRIPTION DU MEILLEUR MODE DE REALISATION DE L'INVENTION

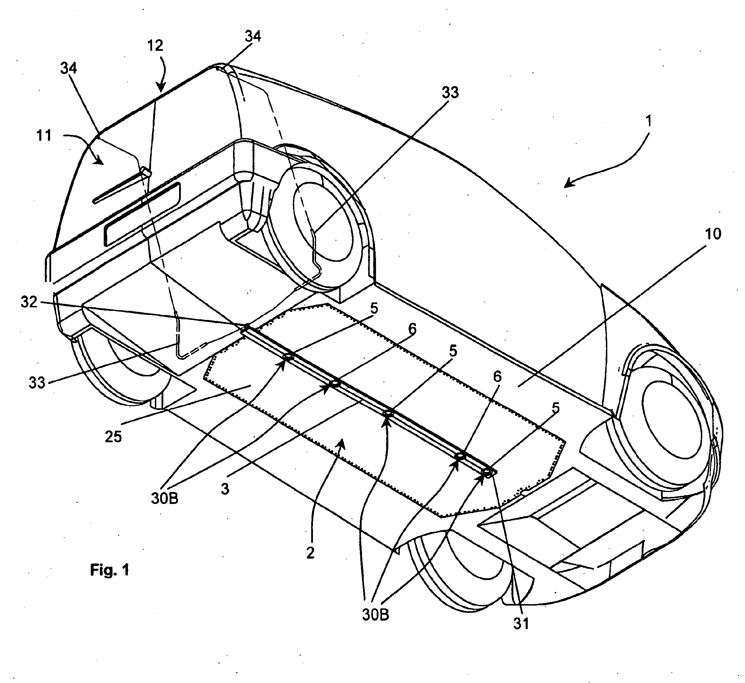

A la figure 1, on voit un véhicule de tourisme 1 ayant un plancher 10 intégrant au moins un réservoir 2 pour le stockage sur le véhicule d'un gaz sous pression. Il peut s'agir de n'importe quel fluide stocké à haute pression, par exemple du gaz de pétrole liquéfié, du gaz naturel comprimé ou de l'hydrogène comprimé, ou encore de l'oxygène. Dans la suite, on suppose que le réservoir 2 est un réservoir de stockage d'un seul fluide gazeux, par exemple de l'hydrogène gazeux, sans que ceci soit limitatif.

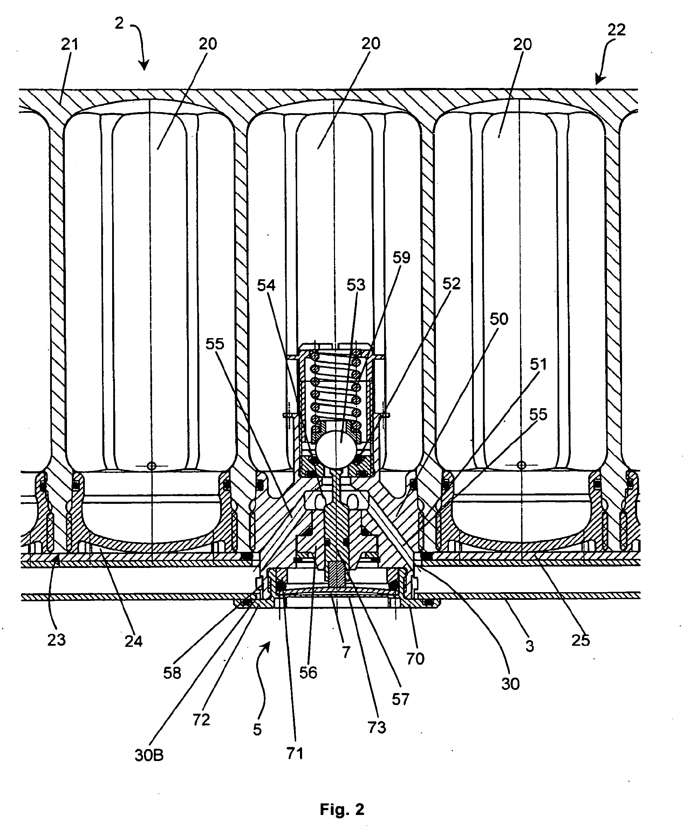

Aux figures 2 et suivantes, on voit que le réservoir 2 comporte un très grand nombre de cellules 20 de petit volume, reliées entre elles. Le réservoir comporte une base 21 qui comporte autant d'évidements que de cellules 20. Les évidements s'étendent tous depuis une première face 22 vers la face opposée 23. Ils sont tous débouchant à la première face 22 et non débouchant à la face opposée 23. Chaque évidemment est obturé par un bouchon 24, sauf là où l'on installe une soupape de sécurité qui prend alors la place d'un tel bouchon. Les bouchons 24 sont vissés sur la base 21, un joint d'étanchéité 24A étant prévu dans une gorge appropriée. Pour plus de détails sur la constitution du réservoir 2, le lecteur est invité à se reporter à la demande de brevet EP 03/028056.4 précitée.

Une tôle de protection 25 est plaquée contre la face inférieure 23 du réservoir 2. Une canalisation de collecte 3 est disposée juste sous la tôle de protection 25, longitudinalement par rapport au véhicule. Cette canalisation de collecte 3 est ici de section rectangulaire très aplatie, ce qui apparaît bien également aux figures suivantes. Du côté avant du véhicule, cette canalisation de collecte 3 est obturée par une paroi 31. Du côté arrière du véhicule, la canalisation de collecte 3 aboutit à un ou deux emmanchements 32 auxquels sont accouplés des tuyaux 33. La canalisation de collecte 3 et les tuyaux 33 forment ensemble la canalisation de purge. Les tuyaux 33 rejoignent des orifices de décharge 34. Ceux-ci sont situés sur la paroi verticale arrière 11 du véhicule 1, à un niveau proche du pavillon 12.

La canalisation de collecte 3 comporte un certain nombre de premiers perçages 30 (voir figure 2) réalisés au moins sur une des grandes faces de la canalisation de collecte 3. Par ailleurs, la canalisation de collecte 3 comporte un certain nombre de seconds perçages 30B réalisés sur l'autre des grandes faces de la canalisation de collecte et en regard de chacun des premiers perçages 30. Les premiers perçages et les seconds perçages 30B sont par exemple réalisés à cinq endroits comme on le voit à la figure 1. Les premiers et seconds perçages 30 et 30B sont exactement en regard de cinq cellules 20 du réservoir 2. La tôle de protection 25 comporte également cinq perçages, eux aussi exactement en regard des mêmes cinq cellules 20 du réservoir 2.

Des soupapes de sécurité sont vissées sur le réservoir 2, à la place d'autant de bouchons 24 comme on l'a déjà signalé, c'est à dire en regard des cinq endroits évoqués ci-dessus. La canalisation de collecte 3 est maintenue plaquée contre la tôle de protection 25 et donc contre le réservoir 2 de façon à assurer la communication avec les soupapes de sécurité et l'étanchéité vis à vis de l'extérieur. Dans cet exemple, on a utilisé trois soupapes à déclenchement thermique 5 et deux soupapes à seuil de pression 6, la structure de chacun de ces types de soupape étant détaillée ci-dessous. Ainsi, la canalisation de collecte 3 permet le branchement en parallèle de plusieurs cellules 20 et, lorsque l'une ou plusieurs des soupapes de sécurité installées sur certaines cellules 20 s'ouvre, le fluide gazeux qui s'échappe au travers de la ou des soupapes de sécurité est collecté par la canalisation de purge et rejeté à un ou plusieurs orifice de décharge 34.

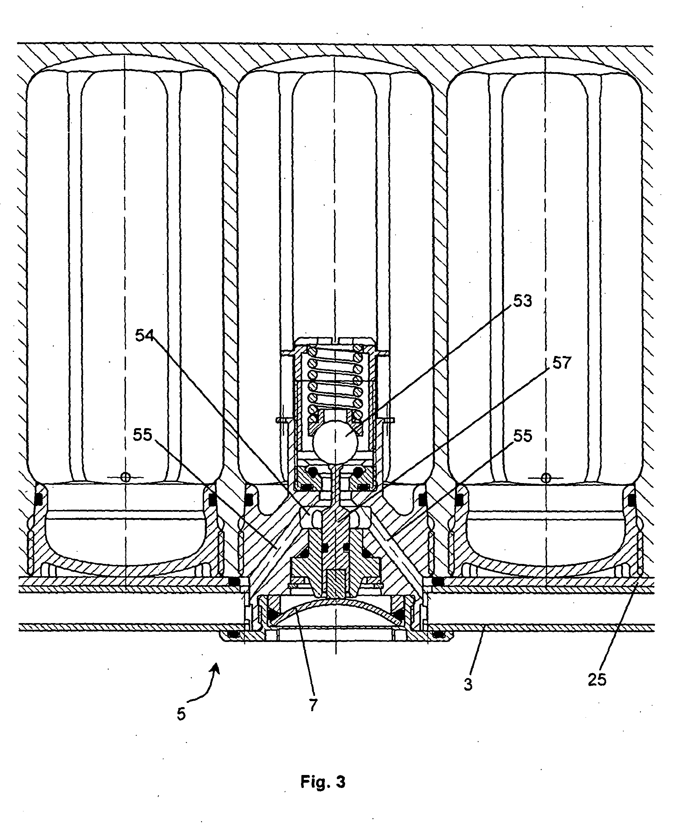

Abordons maintenant les détails de réalisation d'une soupape de sécurité à déclenchement thermique 5. Une première variante de réalisation est illustrée aux figures 2 et 3.

On voit un corps 50 comportant un filetage 51 pour être vissé sur le réservoir 2. Ce corps 50 comporte un siège 52 obturé par une bille 53. On peut installer un ressort 59 qui provoque une précharge modérée tendant à repousser la bille 53 contre son siège 52. Par ailleurs, plus la pression du fluide à l'intérieur de la cellule 20 est élevée, plus la bille 53 tend à appuyer fermement contre son siège 52, assurant ainsi une parfaite étanchéité.

Par-dessous le siège 52, on voit une chambre 54 communiquant avec des conduits 55 aboutissant sur la paroi latérale du corps 50. Le centre du corps 50 comporte un alésage à l'intérieur duquel est monté un fourreau 56 assurant le guidage d'un piston central 57. Du côté opposé au siège 52, le corps 50 comporte une collerette 58 recevant par vissage un obturateur 70. L'obturateur présente d'un côté une paroi cylindrique centrale 73 et un anneau périphérique 72. Du côté intérieur, l'obturateur 70 emprisonne une pastille 7 réalisée en alliage à mémoire de forme, laquelle est par ailleurs en appui sur une bague 71, elle même montée contre le corps 50. Remarquons que, lorsque le corps 50 a été vissé sur le réservoir 2, le corps 50 déborde du réservoir 2. Grâce aux premiers 30 et seconds 30B perçages réalisés sur la canalisation de collecte 3, et grâce à des perçages similaires réalisés sur la tôle de protection 25, lorsque l'on installe ladite tôle de protection et la canalisation de collecte, la collerette 58 de chacun des corps 50 reste accessible de l'extérieur. On peut visser l'obturateur 70 sur le corps 50 tout en emprisonnant la tôle de protection 25 et la canalisation de collecte 3 grâce à l'anneau 72 de chaque obturateur 70, ledit anneau appuyant sur la paroi extérieure de la canalisation de collecte 3. La canalisation de collecte 3 est ainsi maintenue de façon étanche sur le corps 50.

Les figures 2 et 3 montrent un obturateur 70 de type borgne, c'est à dire qu'il comporte une mince paroi cylindrique centrale 73, pour isoler la pastille 7 de l'extérieur. Cela présente l'avantage d'offrir une protection mécanique contre les agressions extérieures, sans retarder notablement l'échauffement de la pastille 7. Mais on peut envisager également d'utiliser une pièce de fixation dépourvue de cette mince paroi cylindrique centrale, ce qui permet un contact direct de la source de chaleur (flammes) avec la pastille 7, pour un temps de réaction minimal.

La soupape proposée par l'invention peut être utile dans des applications autres que le véhicule de tourisme 1 décrit ci-dessus. Elle est de type à ouverture permanente dès qu'elle est soumise à une première élévation de température. Elle comporte une bille coopérant avec un siège et un ressort repoussant la bille contre son siège pour maintenir la soupape en position normalement fermée à température ambiante, et comporte une pastille en alliage à mémoire de forme ayant une première forme à température ambiante, un piston étant interposé entre la bille et la pastille. Selon une caractéristique essentielle de la soupape selon l'invention, la pastille en alliage à mémoire de forme est de type adoptant une forme mémorisée la première fois qu'elle est soumise à une élévation de température. De ce fait, le piston repousse la bille hors de son siège lorsque la pastille passe de la première forme à la forme mémorisée.

On sait que les alliages à mémoire de forme se transforment d'une structure cristalline à une autre lors du passage dans une zone de température déterminée. C'est de cette transformation que les alliages à mémoire de forme tiennent leurs propriétés et leur dénomination. Il en résulte que l'on peut donner à tout objet réalisé en alliage à mémoire de forme deux formes différentes: l'une à basse température et l'autre à haute température appelée ci-dessous « forme mémorisée ». La zone de température à laquelle survient la transformation dépend de la composition de cet alliage et de l'éducation que l'on fait subir à cet alliage en exerçant certaines contraintes mécaniques dans des conditions de température déterminées.

Ceci étant rappelé, en ce qui concerne la réalisation de la pastille 7, on utilise par exemple un métal à mémoire de forme NiTi. Cet alliage subit un changement de sa structure cristalline lorsqu'il est refroidi, c'est à dire qu'il passe de son état dur, de structure austenitique (haute température), à son état aisément déformable, de structure martensitique (basse température). La température de transition choisie pour la pastille 7 est d'environ 90°C (à + ou - 5°C). Un matériau ayant les propriétés requises est bien connu de l'homme du métier ; à titre d'information, il est disponible par exemple chez Special Metals Corporation, New Hartford, NY. La pastille a comme forme initiale une calotte sphérique (proche de celle figurant à la figure 3). A température ambiante, la pastille est dans l'état Martensite (mou). Elle peut être assez aisément déformée mécaniquement de façon à rejoindre une forme approximativement plate (forme en disque, illustrée à la figure 2). Lorsque la pastille rejoint une température de l'ordre de 90°C, elle change de phase et passe de l'état Martensite à l'état Austenite (dur). Elle retrouve ainsi sa forme initiale (forme mémorisée) qui est une calotte sphérique. Cette forme persiste même après un retour à la température ambiante. Cela veut dire que le matériau choisi est irréversible dans sa forme tout en étant réversible dans sa structure car il est passé de l'état Austenite (dur) à l'état Martensite (mou). La seule façon de lui faire reprendre une forme de disque est une action mécanique externe.

De préférence, en position normalement fermée à la température ambiante, il subsiste un léger jeu entre la pastille 7, le piston central 57 et la bille 53, de sorte que celle-ci reste fermement pressée contre son siège 52. A la figure 2, on voit l'allure de la pastille 7 à la température ambiante.

A la figure 3, on voit l'allure que prend la même pastille 7 sous l'effet d'une élévation de température (forme mémorisée). Le degré de déformation dépend du dimensionnement de la pastille 7 elle-même. Pour une pastille réalisée comme indiqué ci-dessus, la déformation s'amorce lorsque la pastille 7 a atteint la température de 75°C. Dès les jeux de montage rattrapés, la pastille développe un effort important. Dès que l'on a soulevé suffisamment la bille, l'effort développé par la pastille diminue mais reste suffisant pour lutter contre l'effort développé par le ressort. On atteint la déformation maximale telle qu'illustré à la figure 3 lorsque la pastille 7 a atteint la température de 100°C. De plus, il s'avère qu'une telle pastille 7 est capable de développer un effort suffisamment important pour pouvoir repousser le piston 57 contre la pression interne qui s'applique sur la bille du côté de la cellule contenant le fluide sous pression élevée (de l'ordre de 200 à 300 bar), et contre la pression d'un ressort de maintien.

Comme déjà indiqué, après sollicitation thermique puis refroidissement d'une telle pastille 7, si l'on souhaitait lui faire reprendre sa forme initiale par exemple pour reconditionner la soupape de sécurité à déclenchement thermique 5, il est nécessaire de la déformer mécaniquement. Grâce à la pastille 7, du fait qu'un échauffement suffisant lui fait prendre de façon permanente ladite forme mémorisée, la soupape 5 s'ouvre de façon certaine et reste ouverte même si l'échauffement diminue ou cesse.

On vient d'indiquer que la soupape à déclenchement thermique 5 comporte une pastille 7 réalisée en alliage à mémoire de forme. C'est une forme de réalisation préférée d'un mécanisme de déclenchement utilisant un organe de déclenchement réalisé dans un alliage à mémoire de forme, ledit alliage à mémoire de forme étant de caractéristiques telles qu'il adopte, lorsqu'il est soumis une première fois à une élévation de température l'amenant au delà d'un seuil de température prédéfini, une forme mémorisée, et ceci de façon thermiquement irréversible.

Bien entendu, un certain nombre de joints sont utilisés pour assurer la parfaite étanchéité du montage, comme cela apparaît clairement aux dessins sans qu'il soit besoin de plus ample explication. Les conduits 55 aboutissant sur la paroi latérale du corps 50 sont en communication directe avec la canalisation de collecte 3 de sorte que, en cas d'ouverture de la soupape de sécurité à déclenchement thermique 5, les gaz s'échappent dans la chambre 54 puis cheminent au travers des conduits 55 aboutissant sur la paroi latérale du corps 50, où ils rejoignent la canalisation de collecte 3, sans pouvoir s'échapper dans l'environnement extérieur au niveau de la soupape de sécurité à déclenchement thermique 5 de la canalisation de collecte 3.

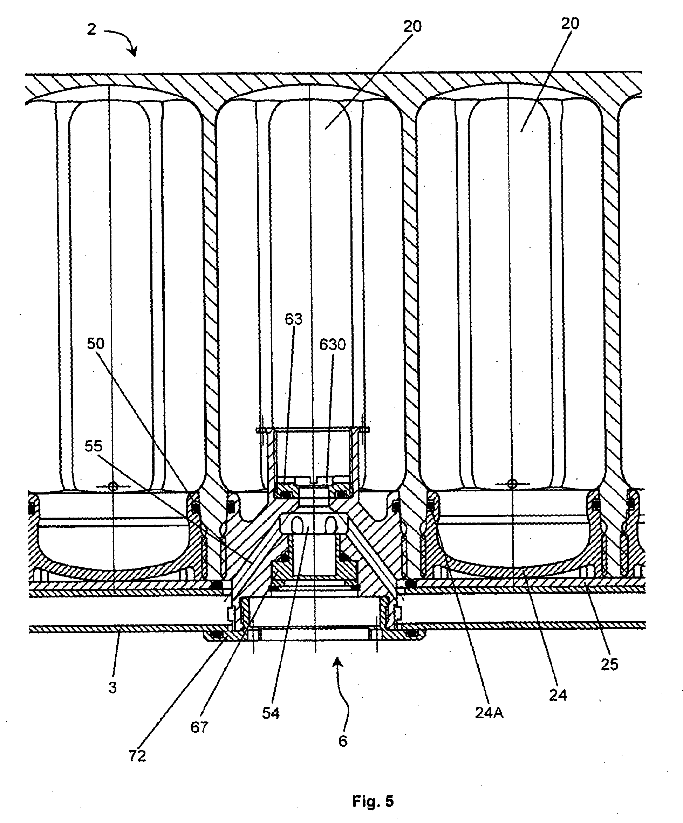

On peut bien entendu ajouter d'autres types de soupapes comme par exemple une soupape à seuil de pression 6 telle que celle illustrée à la figure 5. Celle-ci utilise le même corps 50 que le corps de la soupape à déclenchement thermique 5. Du côté du réservoir, ce corps 50 reçoit un insert 63 comportant en son centre 630 une membrane de rupture calibrée. L'insert 63 est interchangeable. La chambre 54 est fermé par un capuchon 67. Le corps 50 reçoit un écrou un obturateur 70 de type borgne identique à celui utilisé aux figures 1 et 2.

Ainsi, dans une mise en oeuvre particulièrement avantageuse de l'invention, le réservoir du véhicule comporte un ensemble de cellules interconnectées pour assurer la circulation de fluide nécessaire à l'utilisation du véhicule, au moins deux cellules étant branchées chacune à la canalisation de purge, chacune des cellules étant reliée à la canalisation de purge au moyen d'au moins une soupape de sécurité, l'une des soupapes de sécurité étant ladite soupape à déclenchement thermique, l'autre des soupapes de sécurité étant une soupape à seuil de pression s'ouvrant automatiquement et définitivement (ouverture irréversible par exemple par destruction d'un opercule) au-delà d'un seuil de pression prédéfini.

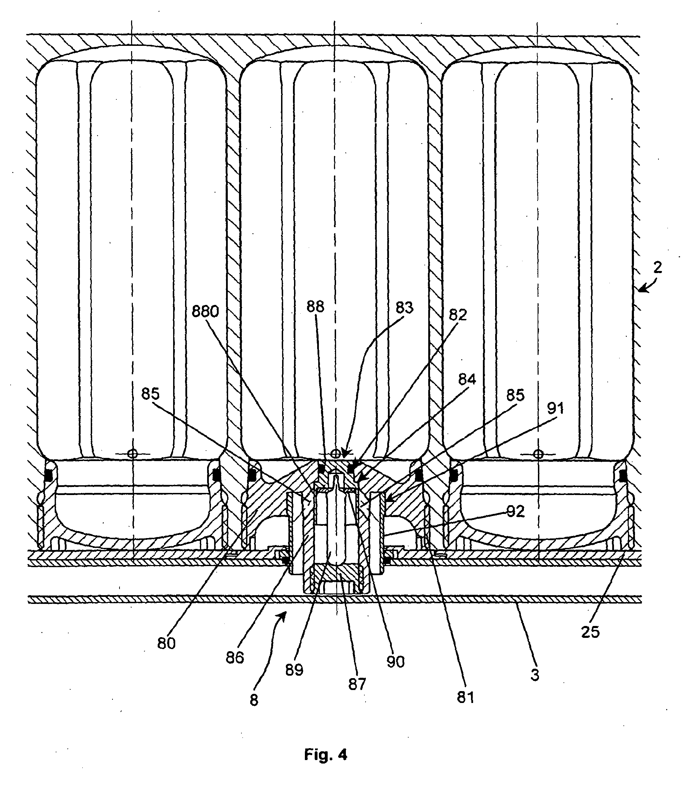

A la figure 4, on a représenté une variante de réalisation d'une soupape à déclenchement thermique 8, dans laquelle le mécanisme de déclenchement utilise une capsule destructible sous l'effet de la chaleur (non utilisée à la figure 1). On voit un corps 80 comportant un filetage 81 pour être vissé sur le réservoir 2. Ce corps 80 comporte un premier alésage 82 obturé par un piston central 83 comportant une tête 88 et une jupe 880 délimitant une zone centrale creuse ouverte d'un côté et fermé de l'autre côté par la tête 88. Le corps comporte une cheminée centrale 86 définissant un second alésage 84 présentant un diamètre légèrement supérieur au diamètre du premier alésage 82. Le piston central 83 est guidé dans le second alésage 84. L'intérieur de la cheminée centrale 86 communique avec un ou plusieurs conduits 85 aboutissant sur la paroi extérieure de la cheminée 86. La cheminée 86 est fermé par un obturateur 87. Une capsule 89 est intercalée entre l'obturateur 87 et une rondelle d'appui 90 déposée contre la tête 88 du piston 83. Cette capsule 89 se brise à une température prédéfinie. Par exemple, on peut trouver de telles capsules se brisant à une température de l'ordre de 90°C chez JOB GmbH, Kurt-Fischer-Strasse 30, D-22926 Ahrensburg.

Le corps 80 comporte encore un troisième alésage 91 à l'intérieur duquel est monté un fourreau 92 délimitant un espace sensiblement annulaire autour de la cheminée 86. Cet espace est en communication avec la canalisation de collecte 3. Lorsque la capsule 89 se brise, plus rien n'empêche le piston central 83, sur lequel agit la pression du fluide dans la cellule 20, de reculer contre l'obturateur 87, mettant ainsi la cellule 20 en liaison avec l'intérieur de la cheminée 86, avec le ou les conduits 85, avec l'espace sensiblement annulaire entourant la cheminée, et enfin avec la canalisation de collecte 3.

Divers joints d'étanchéité assurent 1a. parfaite étanchéité de l'ensemble, comme montré au dessin sans qu'il soit besoin de plus ample explication. A part le mécanisme central de déclenchement, la soupape de la figure 4 est assez semblable à celle des figures 2 et 3, sa finalité étant en tout cas identique.

## Revendications

1. Véhicule (1) équipé d'un réservoir (2) pour le stockage sur le véhicule d'un fluide sous pression, ledit réservoir étant relié à au moins une canalisation de purge (3 et 33), ladite canalisation de purge aboutissant à un orifice de décharge (34), la canalisation de purge étant reliée au réservoir au moyen d'au moins une soupape de sécurité, **caractérisé en ce que** la soupape de sécurité est une soupape à déclenchement thermique (8), normalement fermée, comportant un mécanisme de déclenchement utilisant une capsule (89) destructible à une température prédéfinie, la soupape de sécurité comportant un corps (80) destiné à être monté sur un réservoir (2), ce corps (80) comportant un premier alésage (82) obturé par un piston central (83) comportant une tête (88) et une jupe (880) délimitant une zone centrale creuse ouverte d'un côté et fermé de l'autre côté par la tête (88), le corps comportant une cheminée centrale (86) définissant un second alésage (84) présentant un diamètre supérieur au diamètre du premier alésage (82), **caractérisée en ce que** l'intérieur de la cheminée centrale (86) communique avec un ou plusieurs conduits (85) aboutissant sur la paroi extérieure de la cheminée (86), la cheminée (86) étant fermée par un obturateur (87), ladite capsule (89) étant intercalée entre l'obturateur (87) et la tête (88) du piston (83), la soupape de sécurité étant installée dans une zone prédéfinie du véhicule et l'orifice de décharge étant éloigné de ladite zone prédéfinie.

2. Véhicule selon la revendication 1, dans lequel la soupape à déclenchement thermique (8) est adjacente au réservoir (2).

3. Véhicule selon la revendication 1 ou 2, dans lequel l'orifice de décharge (34) est situé sur le véhicule dans une zone la plus éloignée possible de la soupape à déclenchement thermique (8).

4. Véhicule selon l'une des revendications 1 à 3, dans lequel le réservoir comporte un ensemble de cellules (20) interconnectées pour assurer la circulation de fluide nécessaire à l'utilisation du véhicule.

5. Véhicule selon la revendication 4 dans lequel au moins deux cellules (20) sont branchées chacune à ladite canalisation de purge, chacune des cellules étant reliée à la canalisation de purge au moyen d'au moins deux soupapes de sécurité, l'une des soupapes de sécurité étant ladite soupape à déclenchement thermique (8), l'autre des soupapes de sécurité étant une soupape à seuil de pression (6) s'ouvrant automatiquement au-delà d'un seuil de pression prédéfini.

6. Véhicule selon l'une des revendications 1 à 5 comportant un plancher, dans lequel la soupape à déclenchement thermique est installée sous le plancher et dans lequel l'orifice de décharge aboutit à la surface du véhicule opposée au plancher.

7. Véhicule selon l'une des revendications 1 à 6, comportant une pile à combustible, ledit réservoir assurant le stockage d'hydrogène gazeux.

8. Soupape à déclenchement thermique (8) comportant un corps (80) destiné à être monté sur un réservoir (2), ce corps (80) comportant un premier alésage (82) obturé par un piston central (83) comportant une tête (88) et une jupe (880) délimitant une zone centrale creuse ouverte d'un côté et fermé de l'autre côté par la tête (88), le corps comportant une cheminée centrale (86) définissant un second alésage (84) présentant un diamètre supérieur au diamètre du premier alésage (82), **caractérisée en ce que** l'intérieur de la cheminée centrale (86) communique avec un ou plusieurs conduits (85) aboutissant sur la paroi extérieure de la cheminée (86), la cheminée (86) étant fermée par un obturateur (87), une capsule (89) destructible sous l'effet de la chaleur étant intercalée entre l'obturateur (87) et la tête (88) du piston (83).

9. Soupape à déclenchement thermique selon la revendication 8, dans la quelle la capsule destructible sous l'effet de la chaleur est une capsule qui se brise.

10. Véhicule selon la revendication 1 dans lequel la capsule destructible à une température prédéfinie est une capsule qui se brise.

## Claims

1. Vehicle (1) equipped with a tank (2) for the on-vehicle storage of a pressurized fluid, the said tank being connected to at least one purge line (3 and 33), the said purge line leading to a discharge orifice (34), the purge line being connected to the tank by means of at least one safety valve, **characterized in that** the safety valve is a thermally triggered valve (8) that is normally closed, comprising a triggering mechanism that uses a capsule (89) that is destroyed at a predefined temperature, the safety valve comprising a body (80) intended to be mounted on a tank (2), this body (80) comprising a first bore (82) closed off by a central piston (83) comprising a crown (88) and a skirt (880) delimiting a hollow central region open on one side and closed on the other by the crown (88), the body comprising a central chimney (86) that defines a second bore (84) of a diameter greater than the diameter of the first bore (82), **characterized in that** the inside of the central chimney (86) communicates with one or more ducts (85) leading to the exterior wall of the chimney (86), the chimney (86) being closed by a shutter (87), the said capsule (89) being interposed between the shutter (87) and the crown (88) of the piston (83), the safety valve being installed in a predefined region of the vehicle and the discharge orifice being distant from the said predefined region.

2. Vehicle according to Claim 1, in which the thermally triggered valve (8) is adjacent to the tank (2).

3. Vehicle according to Claim 1 or 2, in which the discharge orifice (34) is situated on the vehicle in a region as far away from the thermally triggered valve (8) as possible.

4. Vehicle according to one of Claims 1 to 3, in which the tank comprises a collection of cells (20) that are interconnected so as to allow the fluid needed for use of the vehicle to flow.

5. Vehicle according to Claim 4, in which at least two cells (20) are each connected to the said purge line, each of the cells being connected to the purge line by means of at least two safety valves, one of the safety valves being the said thermally triggered valve (8), the other of the safety valves being a valve (6) with a pressure threshold that opens automatically when a predefined pressure threshold is crossed.

6. Vehicle according to one of Claims 1 to 5, comprising a floor, in which the thermally triggered valve is installed under the floor and in which the discharge orifice leads to the surface of the vehicle away from the floor.

7. Vehicle according to one of Claims 1 to 6, comprising a fuel cell, the said tank being used to store gaseous hydrogen.

8. Thermally triggered valve (8) comprising a body (80) intended to be mounted on a tank (2), this body (80) comprising a first bore (82) closed by a central piston (83) comprising a crown (88) and a skirt (880) delimiting a hollow central region open on one side and closed on the other by the crown (88), the body comprising a central chimney (86) defining a second bore (84) of a diameter greater than the diameter of the first bore (82), **characterized in that** the inside of the central chimney (86) communicates with one or more ducts (85) leading to the exterior wall of the chimney (86), the chimney (86) being closed by a shutter (87), a capsule (89) that is destroyed under the effect of heat being interposed between the shutter (87) and the crown (88) of the piston (83).

9. Thermally triggered valve according to Claim 8, in which the capsule that is destroyed under the effect of heat is a capsule which breaks.

10. Vehicle according to Claim 1 in which the capsule that is destroyed at a predefined temperature is a capsule that breaks.

## Patentansprüche

1. Fahrzeug (1), das mit einem Vorratsbehälter (2) ausgerüstet ist, um im Fahrzeug ein mit Druck beaufschlagtes Fluid zu speichern, wobei der Vorratsbehälter mit wenigstens einem Entleerungskanal (3 und 33) verbunden ist, wobei der Entleerungskanal in einer Abführöffnung (34) mündet, wobei der Entleerungskanal mit dem Vorratsbehälter mittels wenigstens eines Sicherheitsventils verbunden ist, **dadurch gekennzeichnet, dass** das Sicherheitsventil ein Ventil (8) mit thermischer Auslösung (8) ist, das normalerweise geschlossen ist und einen Auslösemechanismus enthält, der eine Kapsel (89) verwendet, die bei einer vordefinierten Temperatur zerstörbar ist, wobei das Sicherheitsventil einen Körper (80) aufweist, der an einem Behälter (2) angebracht werden soll, wobei dieser Körper (80) einen Kopf (88) und eine Schürze (880) aufweist, die eine hohle, mittlere Zone begrenzt, die auf einer Seite offen ist und auf der anderen Seite durch den Kopf (88) geschlossen ist, wobei der Körper einen mittleren Schacht (86) aufweist, der eine zweite Bohrung (84) definiert, die einen Durchmesser aufweist, der größer ist als der Durchmesser der ersten Bohrung (82), **dadurch gekennzeichnet, dass** das Innere des mittleren Schachts (86) mit einer oder mehrere Leitungen (85) in Verbindung steht, die an der Außenwand des Schachts (86) enden, wobei der Schacht (86) durch ein Verschlussglied (87) geschlossen ist, wobei die Kapsel (89) zwischen dem Verschlussglied (87) und dem Kopf (88) des Kolbens (83) angeordnet ist, wobei das Sicherheitsventil in einer im Voraus definierten Zone des Fahrzeugs installiert ist und die Abführöffnung von dieser im Voraus definierten Zone entfernt ist.

2. Fahrzeug nach Anspruch 1, wobei sich das Ventil (8) mit thermischer Auslösung in der Nähe des Vorratsbehälters (2) befindet.

3. Fahrzeug nach Anspruch 1 oder 2, wobei sich die Abführöffnung (34) in dem Fahrzeug in einer Zone befindet, die von dem Ventil (8) mit thermischer Auslösung soweit wie möglich entfernt ist.

4. Fahrzeug nach einem der Ansprüche 1 bis 3, wobei der Vorratsbehälter eine Gruppe von Zellen (20) enthält, die miteinander verbunden sind, um die Zirkulation von Fluid sicherzustellen, das für die Nutzung des Fahrzeugs notwendig ist.

5. Fahrzeug nach Anspruch 4, wobei wenigstens zwei Zellen (20) jeweils mit dem Entleerungskanal verbunden sind, wobei jede der Zellen mit dem Entleerungskanal mittels wenigstens zweier Sicherheitsventile verbunden ist, wobei eines der Sicherheitsventile das Ventil (8) mit thermischer Auslösung ist und das andere der Sicherheitsventile ein Ventil (6) mit Druckschwellenwert ist, das sich oberhalb eines im Voraus definierten Druckschwellenwerts automatisch öffnet.

6. Fahrzeug nach einem der Ansprüche 1 bis 5, das einen Boden enthält, wobei das Ventil mit thermischer Auslösung unter dem Boden installiert ist und wobei die Abführöffnung in der Oberfläche des Fahrzeugs gegenüber dem Boden mündet.

7. Fahrzeug nach einem der Ansprüche 1 bis 6, das eine Brennstoffzelle enthält, wobei der Vorratsbehälter die Speicherung von Wasserstoffgas sicherstellt.

8. Ventil (8) mit thermischer Auslösung, das einen Körper (80) aufweist, der an einem Behälter (2) angebracht werden soll, wobei dieser Körper (80) eine erste Bohrung (82) aufweist, die durch einen mittleren Kolben (83) geschlossen ist, der einen Kopf (88) und eine Schürze (880) aufweist, die eine hohle, mittlere Zone begrenzt, die auf einer Seite offen ist und auf der anderen Seite durch den Kopf (88) geschlossen ist, wobei der Körper einen mittleren Schacht (86) aufweist, der eine zweite Bohrung (84) definiert, die einen Durchmesser aufweist, der größer ist als der Durchmesser der ersten Bohrung (82), **dadurch gekennzeichnet, dass** das Innere des mittleren Schachts (86) mit einer oder mehrere Leitungen (85) in Verbindung steht, die an der Außenwand des Schachts (86) enden, wobei der Schacht (86) durch ein Verschlussglied (87) geschlossen ist, wobei eine unter Wirkung der Hitze zerstörbare Kapsel (89) zwischen dem Verschlussglied (87) und dem Kopf (88) des Kolbens (83) angeordnet ist.

9. Ventil mit thermischer Auslösung nach Anspruch 8, wobei die unter Wirkung der Hitze zerstörbare Kapsel eine zerbrechliche Kapsel ist.

10. Fahrzeug nach Anspruch 1, wobei die bei einer vorbestimmten Temperatur zerstörbare Kapsel eine zerbrechliche Kapsel ist.
